# EUROPÄISCHE PATENTSCHRIFT

(11) **EP 2 249 687 B1**
(45) Veröffentlichungstag und Bekanntmachung des Hinweises auf die Patenterteilung: **29.06.2011**
(21) Anmeldenummer: 09703562.0
(22) Anmeldetag: 21.01.2009
(51) Int. Cl.: A47J 45/07

(54) **BESCHLAGTEIL ZUR BEFESTIGUNG AN EINEM KOCH- ODER BRATGEFÄSS**
FITTING PART FOR FASTENING TO A BOILING OR FRYING VESSEL
ÉLÉMENT FERRURE DESTINÉ À ÊTRE FIXÉ À UN USTENSILE DE CUISSON

(30) Priorität: 22.01.2008 DE 102008005567
(43) Veröffentlichungstag der Anmeldung: 17.11.2010
(73) Patentinhaber: HEINRICH BAUMGARTEN KG SPEZIALFABRIK FÜR BESCHLAGTEILE, 57290 Neunkirchen (DE)
(72) Erfinder: BAUMGARTEN, Rolf-Günter, 57290 Neunkirchen (DE)
(74) Vertreter: Tappe, Hartmut
(86) Internationale Anmeldenummer: PCT/EP2009/050671
(87) Internationale Veröffentlichungsnummer: WO 2009/092741

(56) Entgegenhaltungen:
- EP-A- 0 209 461
- DE-A1- 2 010 661
- DE-U1-202006 014 409
- US-A- 5 887 751

## Beschreibung

Die Erfindung betrifft ein Beschlagteil zur Befestigung an einem Koch- oder Bratgefäß nach dem Oberbegriff des Anspruchs 1.

Ein gattungsgemäßes Beschlagteil ist beispielsweise aus der DE 20 2006 014 409 U1 bekannt. Diese bekannten Beschlagteile werden beispielsweise dazu eingesetzt, um einen abnehmbaren Stielgriff oder sonstigen Handgriff am Koch- oder Bratgefäß zu befestigen. Das Beschlagteil ist dabei mindestens zweiteilig ausgebildet, wobei der erste Teil, nämlich das Tragteil, fest mit der Gefäßwandung des Koch- oder Bratgefäßes verbunden wird. An diesem Tragteil wird das zweite Teil des Beschlagteils, nämlich das Griffteil lösbar befestigt, so dass das Griffteil durch den Benutzer wahlweise abgenommen werden kann. Der Griffteil kann beispielsweise als kurzer Handgriff oder insbesondere auch als länglicher Stielgriff ausgebildet sein.

Die Fixierung des Griffteils am Tragteil erfolgt bei gattungsgemäßen Beschlagteilen dadurch, dass das Griffteil zunächst in einer schräg nach oben gerichteten Ausrichtung am Tragteil in Eingriff gebracht und dann durch eine nach unten gerichtete Schwenkbewegung in seiner Gebrauchslage fixiert wird. Durch diese Schwenkbewegung können entsprechend am Tragteil bzw. am Griffteil vorgesehene Befestigungselemente lösbar miteinander in Eingriff gebracht werden. Um ein ungewolltes Lösen des Griffteils vom Tragteil zuverlässig ausschließen zu können, sind die gattungsgemäßen Beschlagteile mit einer Rasteinrichtung ausgestattet. Die Rasteinrichtung ist dabei so ausgebildet, dass sie durch die nach unten gerichtete Schwenkbewegung, insbesondere automatisch, einrastet und dadurch den Griffteil am Tragteil formschlüssig gegen das Zurückschwenken sichert. Dies bedeutet mit anderen Worten, dass das Griffteil bei eingerasteter Rasteinrichtung nicht nach oben zurückgeschwenkt und somit auch nicht vom Tragteil gelöst werden kann. Um den Griffteil später wieder abnehmen so können, ist an der Rasteinrichtung ein Betätigungselement vorgesehen, mit dem die Rasteinrichtung aus der Raststellung ausgerastet werden kann. Nach dem Ausrasten der Rasteinrichtung kann das Griffteil dann durch den Benutzer wieder nach oben verschwenkt und dadurch vom Tragteil gelöst werden.

Ganz grundsätzlich ist bei gattungsgemäßen Beschlagteilen zum Abnehmen des Griffteils also eine zweiteilige Bedienbewegung notwendig. Im ersten Teil der Bedienbewegung muss der Bediener zunächst die Rasteinrichtung durch Betätigung des Betätigungselements ausrasten, um dann das Griffteil im zweiten Teil der Bedienbewegung nach oben zu schwenken und abzunehmen. Diese zweiteilige Bedienbewegung erschwert ein intuitives Verständnis der Funktion des Beschlagteils beim Abnehmen des Griffteils vom Tragteil. Muss das Betätigungselement beispielsweise zum Ausrasten der Rasteinrichtung in Richtung der Längsachse eines Stielgriffs zurückgezogen werden, so entspricht es der intuitiven Erwartung des Benutzers, dass der Stielgriff nach dem Zurückziehen des Betätigungselements in Richtung seiner Längsachse abgezogen werden kann. Ein Abnehmen des Griffteils durch Abziehen in Richtung der Längsachse ist jedoch aufgrund der gattungsgemäßen Fixierung des Griffteils am Tragteil nicht möglich, da diese Fixierung nur durch das nach oben gerichtete Zurückschwenken des Tragteils gelöst werden kann.

Ausgehend von diesem Stand der Technik ist es deshalb Aufgabe der vorliegenden Erfindung ein neues Beschlagteil vorzuschlagen, dass das intuitive Bedienverständnis beim Lösen der Verbindung zwischen Griffteil und Tragteil verbessert.

Diese Aufgabe wird durch ein Beschlagteil nach der Lehre des Anspruchs 1 gelöst.

Vorteilhafte Ausführungsformen der Erfindung sind Gegenstand der Unteransprüche.

Das erfindungsgemäße Beschlagteil beruht auf dem Grundgedanken, dass am Betätigungselement und/oder an der Rasteinrichtung ein Bewegungsführungselement vorgesehen ist, das bei der Ausrastbewegung der Rasteinrichtung am Tragteil zum Eingriff kommt. Die konstruktive Gestaltung des Bewegungsführungselements ist dabei grundsätzlich beliebig, solange das Bewegungsführungselement und das Tragteil während ihres Eingriffs derart zusammenwirken, dass die Ausrastbewegung der Rasteinrichtung ein schräg nach oben gerichtetes Zurückschwenken des Griffteils bewirkt, wobei auch das unterstützen der Zurückschwenkbewegung bzw. ein sich gegenseitiges Bedingen von Zurückschwenkbewegung des Griffteils und der Ausrastbewegung der Rasteinrichtung als bewirken im Sinne der Erfindung anzusehen ist. Dies bedeutet mit anderen Worten, dass durch das Bewegungsführungselement die beiden Teile der Bedienbewegung zum Lösen des Griffteils vom Tragteil, nämlich die Ausrastbewegung und die Zurückschwenkbewegung miteinander gekoppelt werden. Führt der Benutzer die Ausrastbewegung mit der damit verbundenen Verstellung des Betätigungselements bzw. der Rasteinrichtung aus, so bewirkt eine entsprechende kinematische Kopplung über das Bewegungsführungselement zwangsweise ein nach oben gerichtetes Zurückschwenken. Dabei ist es durchaus denkbar, dass die Ausrastbewegung ausgehend von der eingerasteten Endstellung zunächst ein stückweit widerstandsfrei ausgeführt werden kann und erst nach Überwindung eines bestimmten Stellwegs das Bewegungsführungselement am Tragteil zum Eingriff kommt. Die vollständige Verstellung der Rasteinrichtung in die ausgerastete Endstellung ist jedoch erfindungsgemäß prinzipiell nur dann möglich, wenn zugleich auch das Griffteil nach oben zurückgeschwenkt wird. Durch diese Kopplung der beiden Teile der Bedienbewegung wird der Benutzer darin unterstützt intuitiv beide Bewegungsanteile nacheinander bzw. gleichzeitig auszuführen.

Erfindungsgemäß ist am Tragteil eine Rastnase vorgesehen ist, die von einem Rastvorsprung des Griffteils formschlüssig fixierend hintergriffen werden kann. Die Rastnase kann dabei beispielsweise nach oben weisen, so dass der Rastvorsprung des Griffteils durch die nach unten gerichtete Schwenkbewegung formschlüssig mit der Rastnase in Eingriff gebracht werden kann. Die Rasteinrichtung kann dabei so gestaltet sein, dass sie an der Unterseite der Rastnase einrastet und somit ein Zurückschwenken verhindert. Die Bewegungsführung zur Kopplung der Ausrastbewegung mit der Zurückschwenkbewegung ist erfindungsgemäß durch eine unter einem spitzen Winkel schräg gegen den linearen Stellweg des Betätigungselements geneigte Bewegungsführungsfläche realisiert. Durch die schräge Neigung der Bewegungsführungsfläche, die an einer Kontaktfläche des Tragteils, insbesondere an der Rastnase, zur Anlage kommt, wird gewährleistet, dass bei Verstellung des Betätigungselements entlang des linearen Stellwegs die Bewegungsführungsfläche und damit der Griffteil entsprechend der Neigung der Bewegungsführungsfläche nach oben gedrückt und damit das Griffteil zurückgeschwenkt wird.

Um eine intuitiv leichtverständliche Bedienung der Rasteinrichtung beim Ausrasten durch den Benutzer zu ermöglichen, ist es besonders vorteilhaft, wenn die Rasteinrichtung entlang eines linearen Stellwegs axial verschiebbar ist. Dazu kann das Betätigungselement beispielsweise in der Art eines Schiebeknopfs ausgebildet sein, der in Längsrichtung des Griffteils verschoben wird.

Um ein unerwünschtes Ausrasten der Rasteinrichtung zu verhindern, ist es besonders vorteilhaft, wenn die Rasteinrichtung mit einem Federelement vorgespannt ist.

Die eingerastete Endstellung der Rasteinrichtung sollte bevorzugt näher beim Tragteil und damit näher beim Kochgefäß liegen als die ausgerastete Endstellung. Dadurch ist gewährleistet, dass zum Ausrasten der Rasteinrichtung eine vom Tragteil und damit eine vom Kochgefäß weggerichtete Ausrastbewegung notwendig ist, was eine intuitive Benutzung erleichtert.

Nach der Fixierung des Griffteils am Tragteil und dem Einrasten der Rasteinrichtung sollte ein möglichst spielfreier Sitz des Griffteils gewährleistet sein. Um dies zu gewährleisten kann an der Rasteinrichtung eine Sitzfläche vorgesehen werden, die beim Einrasten der Rasteinrichtung an einer Kontaktfläche des Tragteils zur Anlage kommt. Die Sitzfläche kann wiederum unter einem spitzen Winkel schräg gegen den linearen Stellweg des Betätigungselements geneigt sein. Wird die Sitzfläche durch die Federkraft des Federelements nach dem Einrasten der Rasteinrichtung gegen die Kontaktfläche des Tragteils gedrückt, so wird aufgrund der schrägen Anstellung der Sitzfläche das Bewegungsspiel zwischen Sitzfläche und Kontaktfläche immer kleiner, je weiter die Rasteinrichtung in Richtung ihrer eingerasteten Endstellung gedrückt wird. Auf diese Weise wird letztendlich ein spielfreier Sitz des Griffteils am Tragteil gewährleistet.

Um eine einfache und kostengünstige Herstellung des Beschlagteils zu gewährleisten, ist es besonders vorteilhaft Betätigungselement und Rasteinrichtung einstückig miteinander zu verbinden. Dies kann insbesondere in einfacher Weise dadurch geschehen, dass Betätigungselement und Rasteinrichtung aus einem Kunststoff hergestellt, beispielsweise aus einem thermoplastischen Kunststoff spritzgegossen werden. Ist ein Federelement zur Vorspannung der Rasteinrichtung vorgesehen, so kann im Ergebnis die gesamte Funktionalität des Betätigungselements und insbesondere des Bewegungsführungselements durch zwei Bauteile, nämlich das einstückig aus Kunststoff gespritzte Betätigungselement mit Rasteinrichtung und Bewegungsführungselement und des als Zukaufteil preisgünstig zu bekommenden Federelements realisiert werden.

Die Bauart des Griffteils ist grundsätzlich beliebig. Besonders große Bedeutung haben entsprechende Beschlagteile jedoch zur Befestigung von Stielgriffen an Bratpfannen.

Besonders große Vorteile bietet das erfindungsgemäße Beschlagteil, wenn an dem entsprechenden Koch- oder Bratgefäß lediglich an einer Seite nur ein Beschlagteil mit einem Griffteil angebracht ist. Dies entspricht beispielsweise der Bauart von Bratpfannen mit einem Stielgriff. Bei derartigen Kochutensilien mit lediglich einem Griffteil wird durch das erfindungsgemäße Bewegungsführungselement zusätzlich eine Sicherung gegen das ungewollte Lösen des Griffteils bei angehobenem Koch- bzw. Bratgefäß realisiert. Denn das Eigengewicht des Koch- oder Bratgefäßes wirkt der Zurückschwenkbewegung des Griffteils entgegen. Somit ist im Ergebnis ausgeschlossen, dass der Benutzer bei angehobenem Koch- oder Bratgefäß die Rasteinrichtung ausrastet, da ansonsten durch die Ausrastbewegung das gesamte Gewicht des Koch- oder Bratgefäßes angehoben werden müsste. Erst nach dem Abstellen des Koch- oder Bratgefäßes kann der einzige Griff an dem Gefäß durch die entsprechende Entlastung zurückgeschwenkt werden.

Eine Ausführungsform der Erfindung ist in den Zeichnungen schematisch dargestellt und wird nachfolgend beispielhaft erläutert.

Es zeigen:
- Fig. 1: ein Beschlagteil mit Griffteil und Tragteil in Ansicht von oben;
- Fig. 2: das Beschlagteil gemäß Fig. 1 im Längsschnitt entlang der Schnittlinie I-I;
- Fig. 3: das Beschlagteil gemäß Fig. 1 im Längsschnitt entlang der Schnittlinie II-II;
- Fig. 4: das Beschlagteil gemäß Fig. 2 beim Abnehmen des Griffteils vom Tragteil;
- Fig. 5: das Beschlagteil gemäß Fig. 4 nach dem Abnehmen des Griff- teils vom Tragteil.

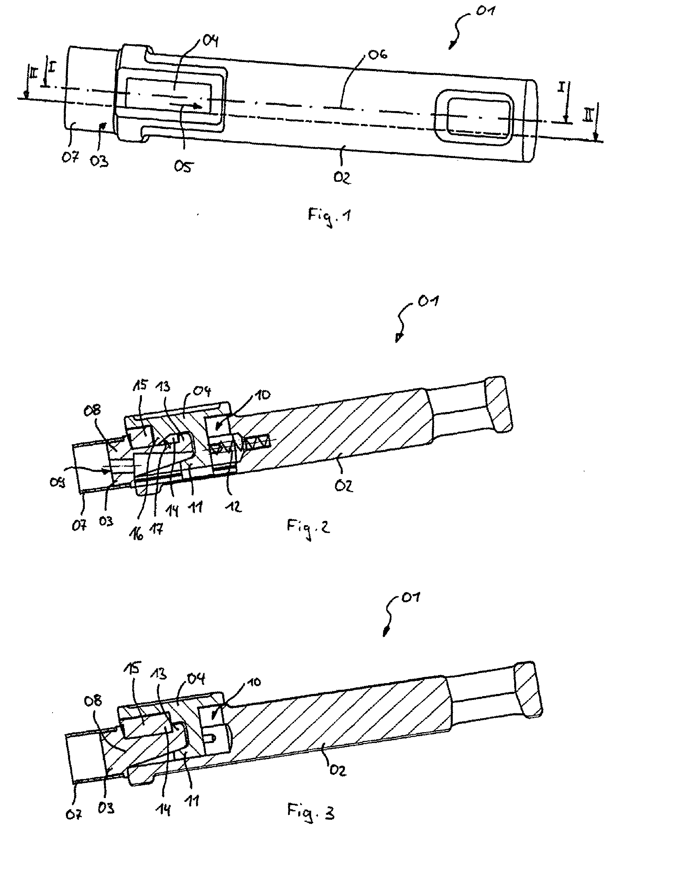

Fig. 1 zeigt ein Beschlagteil 01 in Ansicht von oben. Das Beschlagteil 01 umfasst einen Griffteil 02, der im dargestellten Beispiel in der Art eines Stielgriffs für eine Bratpfanne ausgebildet ist. Weiterhin umfasst das Beschlagteil 01 ein Tragteil 03, das mit seinem freien Ende an der Gefäßwandung eines nicht dargestellten Koch- oder Bratgefäßes befestigt wird. Das Griffteil 02 ist lösbar mit dem Tragteil 03 verbunden, um das Griffteil 02 nach der Befestigung des Tragteils 03 an der Gefäßwandung des Koch- oder Bratgefäßes abnehmen zu können. An der Oberseite des Griffteils 02 ist außerdem ein Betätigungselement 04 vorgesehen, das in Richtung des Bewegungspfeils 05, d.h. in Richtung der Längsachse 06 des Griffteils 02 entlang eines linearen Stellwegs axial verschieblich am Griffteil 02 gelagert ist.

Fig. 2 und Fig. 3 zeigen das Beschlagteil 01 in einem Längsschnitt entlang der Schnittlinie I-I, d.h. im Schnitt entlang der Längsachse 06 (Fig. 2) und in einem Längsschnitt entlang der Schnittlinie II-II. Man erkennt, dass das Tragteil 02 aus einer Hülse 07 und einem Befestigungsteil 08 besteht, wobei das Befestigungsteil 08 mittels einer Befestigungsschraube an der Gefäßwandung eines Koch- oder Bratgefäßes angeschraubt werden kann. Die Befestigungsschraube durchgreift dabei eine Ausnehmung 09 im Befestigungsteil 08 und verspannt das Befestigungsteil 08 und die Hülse 07 gegen die Außenseite der Gefäßwandung.

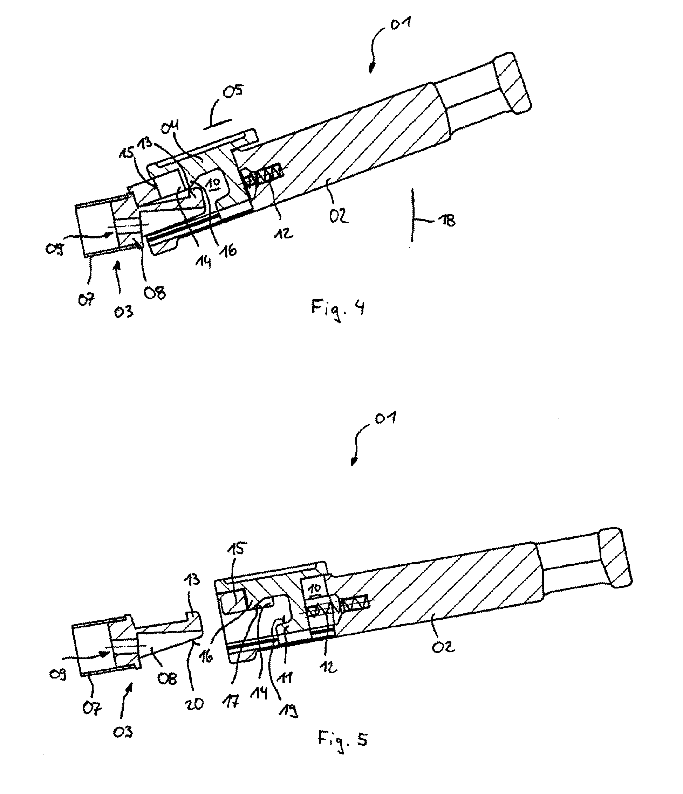

Das Griffteil 02 weist an seiner Oberseite eine Ausnehmung 10 auf, die vom Betätigungselement 04 ins Innere des Griffteils 02 durchgriffen wird. Innenseitig ist das Betätigungselement 04 mit einer Rasteinrichtung 11 einstückig verbunden, so dass die Rasteinrichtung 11 durch axiales Verschieben des Betätigungselements 04 zwischen der in Fig. 2 dargestellten eingerasteten Endstellung und der in Fig. 4 dargestellten ausgerasteten Endstellung axial verstellt werden kann. Mittels eines Federelements 12 ist die Rasteinrichtung 11 elastisch vorgespannt und wird durch die Federkraft in ihre vordere Stellung gedrückt.

Zur Fixierung des Griffteils 02 in seiner Gebrauchslage dient eine Rastnase 13 am Befestigungsteil 08 des Tragteils 03. Wie insbesondere aus dem Längsschnitt in Fig. 3 ersichtlich, kann diese Rastnase 13 von einem Rastvorsprung 14 des Griffteils 02 formschlüssig hintergriffen werden. Der Rastvorsprung 14 wird dabei von der Unterkante eines Stegs 15 gebildet, der die Ausnehmung 10 am Griffteil 02 nach vorne hin begrenzt.

Wird bei der Befestigung des Griffteils 02 am Tragteil 03 das Griffteil 02 in seine in Fig. 2 und Fig. 3 dargestellte Gebrauchslage nach unten geschwenkt, so wird eine Fixierung des Griffteils 02 durch den formschlüssigen Hintergriff des Rastvorsprungs 14 an der Rastnase 13 gewährleistet. Um außerdem ein unerwünschtes erneutes Lösen des Griffteils 02 vom Tragteil 03 zuverlässig ausschließen zu können, rastet die Rasteinrichtung 11 angetrieben durch die Federkraft 12 über der Stirnseite der Rastnase 13 ein, so dass der Griffteil 02 nicht mehr nach oben zurückgeschwenkt werden kann.

Wie aus Fig. 2 ersichtlich ist, weist der Steg 15 im Bereich seiner Mitte eine geringere Tiefe auf, so dass in diesem mittleren Bereich kein Rastvorsprung 14 gebildet ist, der an der Rastnase 13 zum Eingriff kommt. In dieser durch die geringere Tiefe des Stegs 15 gebildeten Ausnehmung wird ein Bewegungsführungselement 16 aufgenommen, das einstückig an das Betätigungselement 04 bzw. an die Rasteinrichtung 11 angeformt ist.

Das Bewegungsführungselement 16 weist eine gegenüber der Längsachse 06 schräg geneigte Bewegungsführungsfläche 17 auf, die beim Zurückschieben des Betätigungselements 04 an einer Kontaktfläche der Rastnase 13 zur Anlage kommt.

Fig. 4 zeigt das Zusammenwirken des Bewegungsführungselements 16 mit der Rastnase 13 beim Lösen des Griffteils 02 vom Tragteil 03. Wird das Betätigungselement 04 aus seiner in Fig. 2 dargestellten eingerasteten Endstellung in Richtung des Bewegungspfeils 05 zurückgezogen, so rastet die Rasteinrichtung 11 ein stückweit aus und eine nach oben gerichtete Zurückschwenkbewegung in Richtung des Bewegungspfeils 18 wird ermöglicht. Damit der Benutzer die erforderliche Bewegungsrichtung in Richtung des Bewegungspfeils 18 intuitiv erkennt, wirkt die Bewegungsführungsfläche 17 mit der Kontaktfläche an der Rastnase 13 zusammen. Aufgrund der schrägen Anstellung der Bewegungsführungsfläche 17 kann nämlich das Betätigungselement 04 nur dann in seine in Fig. 4 dargestellte ausgerastete Endstellung gedrückt werden, wenn das Griffteil zugleich in Richtung des Bewegungspfeils 18 nach oben zurückgeschwenkt wird. Dies ist für den Benutzer haptisch unmittelbar spürbar und ermöglicht somit eine einfache und intuitive Benutzung des Beschlagteils 01 beim Abnehmen des Griffteils 02.

Fig. 5 zeigt das Beschlagteil 01 bei gelöstem Griffteil 02, wobei die Rasteinrichtung aufgrund der Federkraft des Federelements 12 wieder in die vordere Stellung zurückgedrückt wurde. Man erkennt den Steg 15 mit einem der beiden Rastvorsprünge 14, zwischen denen das Bewegungsführungselement 16 axial verschieblich gelagert ist. Eine Sitzfläche 19 an der Rasteinrichtung 11 dient dazu einen spielfreien Sitz des Griffteils 02 auf dem Tragteil 03 zu sichern. Dazu wird die Sitzfläche 19 beim Einrasten der Rasteinrichtung 11 vom Federelement 12 gegen die ebenfalls schräg gegen die Längsachse 06 geneigte Kontaktfläche 20 gedrückt.

## Patentansprüche

1. Beschlagteil (01) zur Befestigung an einem Koch- oder Bratgefäß, mit einem Tragteil (03), das an der Gefäßwandung des Koch- oder Bratgefäßes befestigbar ist, und mit einem Griffteil (02), das lösbar am Tragteil (03) befestigt und mit einer Rasteinrichtung (11) festgelegt werden kann, wobei das Griffteil (02) zur Befestigung am Tragteil (03) in einer schräg nach oben gerichteten Ausrichtung am Tragteil (03) in Eingriff gebracht und durch eine nach unten gerichtete Schwenkbewegung in seiner Gebrauchslage fixiert wird, und wobei die Rasteinrichtung (11) durch die nach unten gerichtete Schwenkbewegung, insbesondere automatisch, einrastet und den Griffteil (02) am Tragteil (03) formschlüssig gegen das Zurückschwenken sichert, und wobei an der Rasteinrichtung (11) ein manuelles Betätigungselement (04) vorgesehen ist, mit dem die Rasteinrichtung (11) beim Lösen des Griffteils (02) aus ihrer Raststellung ausgerastet werden kann, und wobei das Griffteil (02) nach dem Ausrasten der Rasteinrichtung (11) schräg nach oben zurückgeschwenkt und vom Tragteil (03) abgenommen werden kann,
**dadurch gekennzeichnet,**
**dass** am Tragteil (03) eine Rastnase (13) vorgesehen ist, die bei der nach unten gerichteten Schwenkbewegung von einem formkomplementären Rastvorsprung (14) des Griffteils formschlüssig fixierend hintergriffen wird und den Griffteil (02) in seiner Gebrauchslage am Tragteil (03) fixiert, wobei am Betätigungselement (04) ein Bewegungsführungselement (16) mit einer Bewegungsführungsfläche (17) vorgesehen ist, die beim Ausrasten der Rasteinrichtung (11) an einer Kontaktfläche der Rastnase (13) zur Anlage kommt, und wobei die Bewegungsführungsfläche (17) unter einem spitzen Winkel schräg gegen den linearer Stellweg des Betätigungselements (04) geneigt ist, und wobei die Bewegungsführungsfläche (17) bei Verstellung des Betätigungselements (04) entlang des Stellwegs auf der Kontaktfläche der Rastnase (13) entlang gleitet und **dadurch** ein schräg nach oben gerichtetes Zurückschwenken des Griffteils (02) bewirkt.

2. Beschlagteil nach Anspruch 1,
**dadurch gekennzeichnet,**
**dass** das Betätigungselement (04) zur Betätigung der Rasteinrichtung (11) entlang eines linearen Stellwegs axial verschieblich gelagert ist.

3. Beschlagteil nach Anspruch 2,
**dadurch gekennzeichnet,**
**dass** der lineare Stellweg des Betätigungselements (04) parallel zur Längsachse (06) des Griffteils (02) verläuft.

4. Beschlagteil nach einem der Ansprüche 1 bis 3,
**dadurch gekennzeichnet,**
**dass** die Rasteinrichtung (11) mit einem Federelement (12) vorgespannt ist, wobei die Rasteinrichtung (11) durch die Vorspannung des Federelements (11) in der eingerasteten Endstellung gehalten wird.

5. Beschlagteil nach einem der Ansprüche 1 bis 4,
**dadurch gekennzeichnet,**
**dass** die eingerastete Endstellung der Rasteinrichtung (11) näher beim Tragteil (03) liegt als die ausgerastete Endstellung der Rasteinrichtung (11).

6. Beschlagteil nach einem der Ansprüche 1 bis 5,
**dadurch gekennzeichnet,**
**dass** an der Rasteinrichtung (11) eine Sitzfläche (19) vorgesehen ist, die beim Einrasten der Rasteinrichtung (11) an einer Kontaktfläche (20) des Tragteils (03) zur Anlage kommt, wobei die Sitzfläche (19) unter einem spitzen Winkel schräg gegen den linearen Stellweg des Betätigungselements (04) geneigt ist und durch die Federkraft des Federelements (12) spielfrei gegen die Kontaktfläche (20) des Tragteils (03) gedrückt wird.

7. Beschlagteil nach einem der Ansprüche 1 bis 6,
**dadurch gekennzeichnet,**
**dass** das Betätigungselement (04) und die Rasteinrichtung (11) einstückig miteinander verbunden sind.

8. Beschlagteil nach einem der Ansprüche 1 bis 7,
**dadurch gekennzeichnet,**
**dass** das Betätigungselement (04) und/oder die Rasteinrichtung (11) aus Kunststoff, insbesondere aus einem thermoplastischen Kunststoff, hergestellt sind.

9. Beschlagteil nach einem der Ansprüche 1 bis 8,
**dadurch gekennzeichnet,**
**dass** das Griffteil (02) in der Art eines Stielgriffs ausgebildet ist.

10. Koch- oder Bratgefäß zur Zubereitung von Speisen,
**dadurch gekennzeichnet,**
**dass** an einer Seite der Gefäßwandung des Koch- oder Bratgefäßes ein Beschlagteil (01) nach einem der Ansprüche 1 bis 9 angebracht ist.

## Claims

1. A fitting part (01) for attaching to a cooking or frying vessel, comprising a support part (03), which can be attached to the vessel wall of the cooking or frying vessel, and comprising a handle part (02), which can be removably attached to the support part (03) and which can be fixed by means of a latching device (11), wherein the handle part (02) is engaged with the support part (03) in an upward tilted direction for attaching to the support part (03) and is secured in its position of use by means of a downward tilting motion, and wherein the latching device (11) latches by means of the downward tilting motion, in particular automatically, and secures the handle part (02) to the support part (03) by means of a positive fit against tilting back, and wherein provision is made on the latching device (11) for a manual actuating element (04) by means of which the latching device (11) can be unlatched from its latched position in response to the release of the handle part (02) from its latched position, and wherein the handle part (02) can be tilted back upward at an incline after the unlatching of the latching device (11) and can be removed from the support part (03),
**characterized in**
**that** provision is made on the support part (03) for a latching lug (13), which is engaged behind so as to be secured in a positive fit by means of a detent lug (14), which has a complementary form, of the handle part and which secures the handle part (02) in its position of use on the support part (03), wherein provision is made at the actuating element (04) for a motion guide element (16) comprising a motion guide surface (17), which comes to rest at a contact surface of the latching lug (13) in response to the unlatching of the latching device (11), and wherein the motion guide surface (17) is tilted at an acute angle at an incline against the linear travel of the actuating element (04), and wherein the motion guide surface (17) glides on the contact surface of the latching lug (13) in response to the adjustment of the actuating element (04) along the travel and thus causes the handle part (02) to tilt back in an upward tilted direction.

2. The fitting part according to claim 1,
**characterized in**
**that** the actuating element (04) is supported so as to be axially displaceable along a linear travel for actuating the latching device (11).

3. The fitting part according to claim 2,
**characterized in**
**that** the linear travel of the actuating element (04) runs parallel to the longitudinal axis (06) of the handle part (02).

4. The fitting part according to one of claims 1 to 3,
**characterized in**
**that** the latching device (11) is prestressed by means of a spring element (12), wherein the latching device (11) is held in the latched end position by prestressing the spring element (11).

5. The fitting part according to one of claims 1 to 4,
**characterized in**
**that** the latched end position of the latching device (11) is located closer to the support part (03) than the unlatched end position of the latching device (11) .

6. The fitting part according to one of claims 1 to 5,
**characterized in**
**that** provision is made on the latching device (11) for a bearing surface (19), which comes to rest on a contact surface (20) of the support part (03) in response to the latching of the latching device (11), wherein the bearing surface (19) is tilted at an acute angle at an incline against the linear travel of the actuating element (04) and is pressed against the contact surface (20) of the support part (03) free from play by means of the spring force of the spring element (12).

7. The fitting part according to one of claims 1 to 6,
**characterized in**
**that** the actuating element (04) and the latching device (11) are connected to one another in one piece.

8. The fitting part according to one of claims 1 to 7,
**characterized in**
**that** the actuating element (04) and/or the latching device (11) are made of plastic, in particular of a thermoplastic plastic.

9. The fitting part according to one of claims 1 to 8,
**characterized in**
**that** the handle part (02) is embodied in the type of a handle.

10. A cooking or frying vessel for preparing food,
**characterized in**
**that** a fitting part (01) according to one of claims 1 to 9 is attached on one side of the vessel wall of the cooking or frying vessel.

## Revendications

1. Garniture (01) à fixer sur un récipient de cuisson ou de friture, avec un élément porteur (03), susceptible de se fixer sur une paroi du récipient de cuisson ou de friture et avec un élément formant poignée, (02), qui est fixé de façon amovible sur l'élément porteur (03) et qui peut se bloquer au moyen d'un dispositif d'enclenchement (11), pour se fixer sur l'élément porteur (03), l'élément en poignée (02) étant mis en engagement sur l'élément porteur (03) dans une orientation dirigée en inclinaison vers le haut et par un pivotement dirigé vers le bas étant fixé dans sa position d'utilisation et le dispositif d'enclenchement (11) s'enclenchant de façon notamment automatique du fait du pivotement dirigé vers le bas et bloquant l'élément formant poignée (02) par complémentarité de forme sur l'élément porteur (03) contre un pivotement vers l'arrière et sur le dispositif d'enclenchement (11) étant prévu un élément de manoeuvre (04) à l'aide duquel, au détachement de l'élément formant poignée (02) le dispositif d'enclenchement peut se déclencher de sa position d'enclenchement et après le déclenchement du dispositif d'enclenchement (11) l'élément formant poignée (02) pouvant être pivoté en inclinaison vers le haut et retiré de l'élément porteur (03),
**caractérisé en ce que**
sur l'élément porteur (03) est prévu un tenon d'enclenchement (13) qui lors du pivotement dirigé vers le bas est saisi par l'arrière en étant fixé par complémentarité de forme par une saillie d'enclenchement (14) à forme complémentaire de l'élément formant poignée et fixant l'élément formant poignée (02) dans sa position d'utilisation sur l'élément porteur (03), un élément guide du mouvement (16) avec une surface de guidage du mouvement (17) étant prévu sur l'élément de manoeuvre (04), qui lors du déclenchement du dispositif d'enclenchement (11) vient s'appliquer sur une surface de contact du tenon d'enclenchement (13) et la surface de guidage du mouvement (17) étant inclinée en oblique, sous un angle aigu contre la course de réglage de l'élément de manoeuvre (04) et à l'ajustage de l'élément de manoeuvre (04), la surface de guidage du mouvement (17) glissant le long de la course de réglage sur la surface de contact du tenon d'enclenchement (13) et provoquant de ce fait un pivotement arrière dirigé vers le haut de l'élément formant poignée (02).

2. Garniture selon la revendication 1,
**caractérisée en ce que**
pour la manoeuvre du dispositif d'enclenchement (11), l'élément de manoeuvre (04) est logé en étant déplaçable en direction axiale le long d'une course de réglage linéaire.

3. Garniture selon la revendication 2,
**caractérisée en ce que**
la course de réglage linéaire de l'élément de manoeuvre (04) s'étend à la parallèle de l'axe longitudinal (06) de l'élément formant poignée (02).

4. Garniture selon l'une quelconque des revendications 1 à 3,
**caractérisée en ce que**
le dispositif d'enclenchement (11) est précontraint par un élément formant ressort (12), le dispositif d'enclenchement (11) étant maintenu dans la position finale enclenchée sous la précontrainte de l'élément formant ressort (11).

5. Garniture selon l'une quelconque des revendications 1 à 4,
**caractérisée en ce que**
la position finale enclenchée du dispositif d'enclenchement (11) est plus proche de l'élément porteur (03) que la position finale déclenchée du dispositif d'enclenchement (11).

6. Garniture selon l'une quelconque des revendications 1 à 5,
**caractérisée en ce que**
sur le dispositif d'enclenchement (11) est prévue une surface d'assise (19), qui à l'enclenchement du dispositif d'enclenchement (11) vient s'appliquer sur une surface de contact (20) de l'élément porteur (03), la surface d'assise (19) étant inclinée sous un angle aigu, en oblique contre la course de réglage linéaire de l'élément de manoeuvre (04) et sous la tension de ressort de l'élément formant ressort (12), étant pressée sans laisser de jeu contre la surface de contact (20) de l'élément porteur (03).

7. Garniture selon l'une quelconque des revendications 1 à 6,
**caractérisée en ce que**
l'élément de manoeuvre (04) et le dispositif d'enclenchement (11) sont reliés l'un à l'autre en monobloc.

8. Garniture selon l'une quelconque des revendications 1 à 7,
**caractérisée en ce que**
l'élément de manoeuvre (04) et/ou le dispositif d'enclenchement (11) sont fabriqués en matière plastique, notamment en matière thermoplastique.

9. Garniture selon l'une quelconque des revendications 1 à 8,
**caractérisée en ce que**
l'élément formant poignée (02) est conçu à la manière d'une poignée manche.

10. Récipient de cuisson ou de friture pour la préparation d'aliments,
**caractérisé en ce que**
sur un côté de la paroi du récipient de cuisson ou de friture est montée une garniture (01) selon l'une quelconque des revendications 1 à 9.
